# EUROPÄISCHE PATENTSCHRIFT

(11) **EP 0 541 897 B1**
(45) Veröffentlichungstag und Bekanntmachung des Hinweises auf die Patenterteilung: **27.12.1995**
(21) Anmeldenummer: 92108999.1
(22) Anmeldetag: 28.05.1992
(51) Int. Cl.: B65D 85/72, B65D 51/24, A47J 43/20

(54) **Verfahren zur Formgebung einer Essware, mit einem als Essgeschirr ausgebildeten Behälter**
Method for forming a food product with a container used as crockery
Méthode pour donner une forme à un produit alimentaire, avec un récipient servant comme élément de vaisselle

(30) Priorität: 14.11.1991 CH 3321/91
(43) Veröffentlichungstag der Anmeldung: 19.05.1993
(73) Patentinhaber: ZENTRALSCHWEIZERISCHER MILCHVERBAND (MVL), CH-6002 Luzern (CH)
(72) Erfinder: Kienle, Erich, CH-6032 Emmen (CH)
(74) Vertreter: Blum, Rudolf Emil Ernst

(56) Entgegenhaltungen:
- FR-A- 2 057 963
- US-A- 3 021 001

## Beschreibung

Die Erfindung betrifft ein Verfahren zur Formgebung einer Essware, mit einem als Essgeschirr ausgebildeten Behälter mit einem Behälterkörper und einem Verschlussdeckel, welcher Behälterkörper einen Boden und eine mit demselben untrennbar verbundene Seitenwand aufweist und zur Aufnahme einer mit Hilfe eines Essbestecks unmittelbar aus dem Behälterkörper zur essenden Essware bestimmt ist, die sich während der Herstellung von einem fliessfähigen Zustand zu einem festen Zustand ändert und ohne gestürzt zu werden unmittelbar aus dem als Essgeschirr ausgebildeten Behälter zu verzehren ist, welcher Verschlussdeckel als Gussform ausgebildet ist, die dazu dient, die sich im Behälterkörper befindliche, unmittelbar aus demselben zu verzehrende Essware eine bei geöffnetem Behälter bleibende, strukturierte Form ihrer freien Oberfläche zu erteilen.

Die hier in Betracht zu ziehenden Esswaren sind beispielsweise solche, die im erwärmten Zustand flüssig und im kalten Zustand fest sind, die während dem Abkühlen gelieren, z.B. Sulze, Pudding, Molkereiprodute, etc.

Es gibt Behälter, die einen strukturierten Boden aufweisen, welcher eine zierende Formgebung der betreffenden Fläche einer eingefüllten Essware erzeugt. Zum Verzehren muss jedoch die Essware gestürzt werden, d.h. aus dem Behälter zur Sichtbarmachung der erteilten Form entfernt werden. Für kleinvolumige Esswaren wie Nachspeisen ist dies ein umständliches Vorgehen, das insbesondere von Kindern nicht oder nur fehlerhaft durchgeführt werden kann, so dass z.B. ein Pudding unmittelbar aus dem Behälterkörper verzehrt wird, ohne dass eine beim Boden eingeformte Figur sichtbar wird.

Die US-A-3 021 001 offenbart Behälter zur Aufnahme einer Essware, von Flüssigkeiten oder Pasten, wobei jeder Behälter einen Behälterkörper und einen Deckel aufweist. Dabei sind der Behälterkörper und der Deckel derart ausgebildet, dass der Deckel mit Schnappverschluss auf den Behälterkörper dichtend aufgesetzt werden kann, so dass ein manuelles Verschliessen des Deckels möglich ist und keine mit Wärme arbeitende Hochgeschwindigkeitsverschliessmaschinen notwendig sind, um den Behälter z.B. durch eine Schweissung zwischen dem Deckel und Behälterkörper zu verschliessen.

Der Behälter weist keinen als Gussform ausgebildeten Verschlussdeckel auf, um der eingefüllten Ware eine vorgegebene Form zu erteilen und eine besondere Handhabung des Behälters nach dem Einfüllen der Ware, die auch eine Flüssigkeit sein kann, ist nicht vorgegeben.

Die FR-A-2 057 963 offenbart eine mehrteilige Gussform für sich gegebenenfalls verfestigende Esswaren, die einen mittleren Teil mit einer grossen und einer kleinen Oeffnung aufweist, und einen Verschlussdeckel mit einem einen Vorsprung bildenden Abschnitt. Dieser Abschnitt ist zum Hineinragen in den mittleren Teil bestimmt. Damit lässt sich eine erste Art sich verfestigende Essware durch Einbringen in den mittleren Teil und Verwendung des Verschlussdeckels formen, die eine mittlere Ausnehmung aufweist, welche durch den Vorsprung gebildet wird. In dieser mittleren Ausnehmung der geformten Essware der ersten Art kann eine zweite Essware eingebracht werden, so dass ein ästhetisch ansprechbares Gericht, z.B. Nachspeise, vorliegt. Zum Verspeisen des Gerichtes wird dasselbe entformt, indem es durch die grosse Oeffnung des mittleren Teiles aus der Gussform entnommen wird, d.h. gestürzt wird. Alternativ kann nur die Essware der ersten Art gestürzt werden, und der sich darin befindliche Hohlraum mit einer Essware der zweiten Art, z.B. Fruchtstücke, gefüllt werden.

Die Gussform ist nicht ein als Essgschirr ausgebildeter Behälter und weist grundsätzlich zwei Verschlussdeckel auf. Das Verfahren zur Herstellung, bzw. zum Formen der Essware ist ziemlich aufwendig, weil zwei Verfahrensschritte, unterbrochen durch das Entfernen eines forgebenden Teiles, notwendig sind.

Hier will die Erfindung Abhilfe schaffen. Die Erfindung löst die Aufgabe, ein Verfahren zur Formgebung einer Essware zu schaffen, bei dem die Essware im fliessfähigen Zustand in den Behälterkörper eingefüllt und der Verschlussdeckel vor dem Verfestigen der Essware auf den Behälterkörper aufgesetzt und durch ein Drehen des Behälters zur Berührung mit der fliessfähigen Essware gebracht wird, um ihr die durch den Verschlussdeckel vorgegebene Form zu erteilen, die sich nach ihrem Verfestigen permanent beibehält.

Die durch die Erfindung erreichten Vorteile sind im wesentlichen darin zu sehen, dass die Formgebung der freien Oberfläche der Essware, die unmittelbar aus dem Behälter verzehrt werden kann, sofort nach dem Entfernen des Verschlussdeckels sichtbar wird.

Im folgenden wir die Erfindung anhand von lediglich einen Ausführungsweg darstellenden Zeichnungen näher erläutert.

Es zeigt:

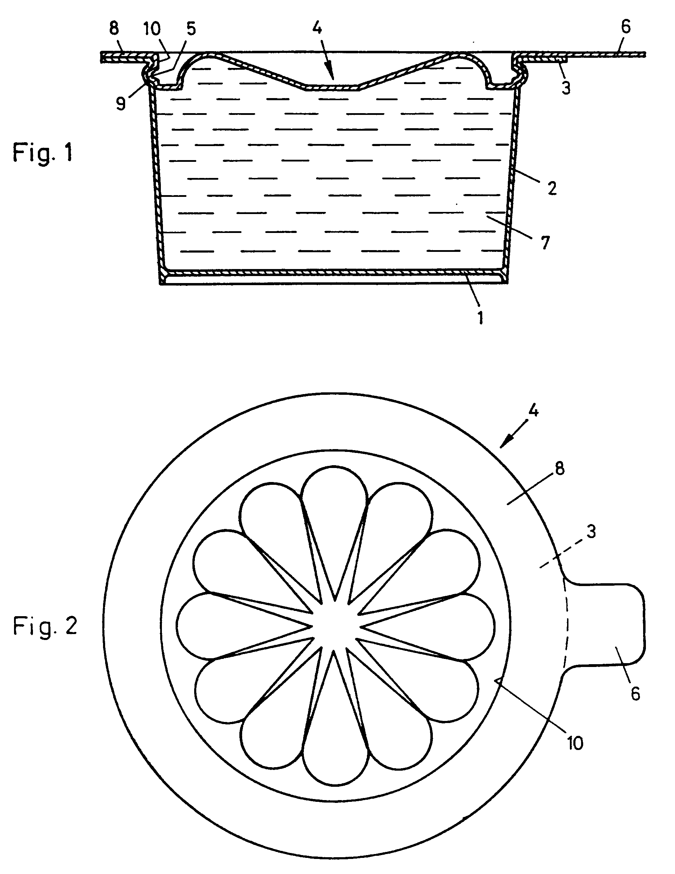

Figur 1 einen Vertikalschnitt durch einen Behälter, und
Figur 2 eine Aufsicht auf den Behälter nach Figur 1.

Der gezeigte Behälter weist einen Behälterkörper mit einem Boden 1, einer Seitenwand 2 und einen von der Seitenwand abstehenden Umfangsrand 3 auf. Der gezeichnete Behälter ist in der Aufsicht kreisrund, er kann jedoch jegliche andere Form, z.B. viereckig aufweisen.

Der Behälterkörper ist durch einen Verschlussdeckel 4 dichtend verschlossen. Der Verschlussdeckel 4 weist einen Umfangsrand 8 auf, bei dem an einer Stelle ein Aufreisslappen 6 absteht. Vom radial inneren Ende des Umfangsrandes 8 erstreckt sich ein Abschnitt 10 des Deckels 4 entlang der Seitenwand 2 des Behälterkörpers nach unten.

Bei diesem Abschnitt 10 ist ein Umfangswulst 5 gezeichnet, der in eine Innenumfangsrille 9 in der Seitenwand 2 hineingreift. Damit ist ein dichter Schnappverschluss gebildet. Es sind auch andere, allgemein bekannte Ausbildungen zum Dichten, Heissversiegeln und Arretieren zwischen dem aus Kunststoff bestehenden Verschlussdeckel 4 und Behälterkörper möglich. In gleicher Weise kann eine aufreissbare Verbindung zwischen dem Umfangsrand 8 des Verschlussdeckels 4 und dem Umfangsrand 3 des Behälterkörpers vorhanden sein.

Aufgrund des sich nach unten erstreckenden Abschnitts 10 des Verschlussdeckels 4 ist somit der Deckelgrund gegen den Innenraum des Becherkörpers hin versenkt angeordnet.

Der Verschlussdeckel 4 verläuft bei dem den Innenraum des Becherkörpers überdeckenden Abschnitt nicht ebenflächig. Er ist, wie aus den Figuren ersichtlich ist, strukturiert ausgebildet, um eine Gussform für die eingefüllte Essware zu bilden.

In der Zeichnung ist eine geometrische Form im Verschlussdeckel gezeichnet. Es sind jedoch auch weitere Formen vorgesehen, z.B. Kinderfiguren, Tierfiguren, Comic-Figuren, Zahlen, Buchstaben, usw.

Man nehme nun an, die Essware sei ein Pudding. Die Puddingmasse wird bei einer erhöhten Temperatur hergestellt, bei welcher sie flüssig, also fliessfähig ist. Von dieser fliessfähigen Masse wird eine Menge in den Behälterkörper eingefüllt, die mindestens annähernd dem Volumen des vom Behälterkörper 1,2,3 und aufgesetztem Verschlussdeckel 4 umschlossenen Volumens entspricht.

Nachdem die Masse eingefüllt worden ist und aufgrund der noch erhöhten Temperatur fliessfähig ist, wird der Verschlussdeckel 4 aufgesetzt und durch Wenden der Verpackung um 180°, fliesst das noch flüssige Produkt in die formgebenden Abschnitte des Verschlussdeckels und nimmt dort die entsprechende Form an. Das heisst, der Behälter wird auf den Kopf gestellt.

Danach lässt man den gefüllten Behälter mit aufgesetztem Verschlussdeckel abkühlen, wobei der Inhalt nun in einen festen Zustand übergeht, beim beschriebenen Beispiel geliert die eingefüllte Essware zu Pudding, und seine Oberfläche weist nun die ihr erteilte Formgebung auf.

Wird der Verschlussdeckel 4 zum Verspeisen des Puddings abgehoben, präsentiert sich nun die sichtbare Oberfläche des Puddings mit der gegebenen Form und der Pudding kann direkt aus dem Behälterkörper verspeist werden.

Es ist eine bekannte, oft ärgerliche Tatsache, dass beim Stürzen eines solchen Erzeugnisses sich Teile nicht vom Boden lösen, sondern daran haften bleiben und vom Rest des Erzeugnisses, z.B. Pudding weggerissen werden. Der Grund dazu ist oft, dass keine Luft zwischen der Innenwand eines solchen Behälters und dessen Inhalt eindringen kann.

Weil der Pudding nicht ein starrer, sondern etwas schlaffer Körper ist, kann er sich insbesondere beim Bereich des Verschlussdeckels bewegen. Diese Bewegung kann sowohl seitlich als auch vertikal erfolgen. Insbesondere beim Lagern wirken Schwerkräfte, aufgrund deren die obere Seite der eingefüllten Masse bestrebt ist, etwas abzusacken. Damit kann z.B. schon vorgängig in der noch fliessfähigen Masse vorhandene Luft, wenn auch nur in kleinsten Mengen, zwischen der Oberfläche des Pudding und der Unterseite des Verschlussdeckels eindringen, so dass gerade bei diesem kritischen Bereich ein insbesondere einfaches Lösen vom Verschlussdeckel, falls überhaupt noch, erfolgen kann.

## Patentansprüche

1. Verfahren zur Formgebung einer Essware, mit einem als Essgeschirr ausgebildeten Behälter mit einem Behälterkörper (1,2,3) und einem Veschlussdeckel (4), welcher Behälterkörper einen Boden (1) und eine mit demselben untrennbar verbundene Seitenwand (2) aufweist und zur Aufnahme einer mit Hilfe eines Essbestecks unmittelbar aus dem Behälterkörper (1,2,3) zur essenden Essware (7) bestimmt ist, die sich während der Herstellung von einem fliessfähigen Zustand zu einem festen Zustand ändert und ohne gestürzt zu werden unmittelbar aus dem als Essgeschirr ausgebildeten Behälter zu verzehren ist, welcher Verschlussdeckel (4) als Gussform ausgebildet ist, die dazu dient, die sich im Behälterkörper (1,2,3) befindlichen, unmittelbar aus demselben zu verzehrende Essware (7) eine bei geöffnetem Behälter bleibende, strukturierte Form ihrer freien Oberfläche zu erteilen, wobei die Essware im fliessfähigen Zustand in den Behälterkörper (1,2,3) eingefüllt und der Verschlussdeckel (4) vor dem Verfestigen der Essware auf den Behälterkörper (1,2,3) aufgesetzt und durch ein Drehen des Behälters zur Berührung mit der fliessfähigen Essware gebracht wird, um ihr die durch den Verschlussdeckel (4) vorgegebene Form zu erteilen, die sie nach ihrem Verfestigen permanent beibehält.

2. Verfahren nach Anspruch 1, wobei der Behälter dadurch gekennzeichnet ist, dass das vom Behälterkörper (1,2,3) und aufgesetztem Verschlussdeckel (4) umschlossene Volumen mindestens annähernd gleich dem Volumen der eingefüllten Essware (7) gewählt ist, derart, dass bei aufgesetztem Verschlussdeckel (4) die sich im fliessfähigen Zustand befindliche Essware dessen Innenseite berührt und beim Verfestigen die durch den Verschlussdeckel (4) vorgegebene Form permanent annimmt.

3. Verfahren nach Anspruch 1 oder 2, wobei der Behälter dadurch gekennzeichnet ist, dass der Verschlussdeckel (4) vom Behälterkörper (1,2,3) weg und/oder gegen den Behälterkörper (1,2,3) hin gebauchte Abschnitte aufweist.

4. Verfahren nach einem der vorangehenden Ansprüche, wobei der Behälter dadurch gekennzeichnet ist, dass der Verschlussdeckel (4) einen Umfangsrandabschnitt (8) aufweist, der auf dem oberen Rand (3) der Seitenwand (2) des Behälterkörpers (1,2,3) anliegt und am Umfangsrandabschnitt (8) des Verschlussdeckels (4) ein dichtend an der Innenseite der Seitenwand des Behälterkörpers anliegender, mit dem Umfangsrandabschnitt einen Winkel einschliessender Abschnitt (10) des Verschlussdeckels (4) derart anschliesst, dass der den Innenraum des Behälterkörpers (1, 2,3) oben abschliessende Teil des Verschlussdeckels relativ zum Umfangsrandabschnitt (8) versenkt verläuft.

## Claims

1. Method of forming a food product, with a container formed as a tableware, having a container body (1, 2, 3) and a closure lid (4), which container body comprises a bottom (1) and a side wall (2) inseparable therefrom and is intended for the receipt of a food product (7) which is to be eaten directly out of the container body (1, 2, 3) with the aid of cutlery, which during production changes itself from a flowable state into a solid state and is to be eaten directly out of the container formed as a tableware without having to be overturned, which closure lid (4) is designed as a mould which serves to give the food product (7) located in the container body (1, 2, 3) and to be eaten directly out of same in the opened state of the container a permanent structured shape of its free surface, whereby the food product is filled into the container body (1, 2, 3) in a flowable state, and the closure lid (4) is set onto the container body (1, 2, 3) prior to the solidification of the food product and is brought into contact with the flowable food product by a turning of the container in order to give it the shape pre-set by the closure lid (4), which it keeps permanently after its solidification.

2. Method according to claim 1, whereby the container is characterized in that the volume enclosed by the container body (1, 2, 3) and closure lid (4) set thereupon is selected to be at least approximately equal to the volume of the filled-in food product (7), such that when the closure lid (4) is set, the food product being in the flowable state contacts its inner surface and during solidification permanently obtains the form pre-set by the closure lid (4).

3. Method according to claim 1 or 2, whereby the container is characterized in that the closure lid (4) comprises sections domed away from the container body (1, 2, 3) and/or towards the container body (1, 2, 3).

4. Method according to one of the preceding claims, whereby the container is characterized in that the closure lid (4) comprises a circumferential edge section (8) which lies against the upper edge (3) of the side wall (2) of the container body (1, 2, 3), and that a section (10) of the closure lid (4) contacting in a sealed manner the inner side of the side wall of the container body, and enclosing together with the circumferential edge section an angle, adjoins the circumferential edge section (8) of the closure lid (4) in such a manner that the part of the closure lid closing off the top of the inner space of the container body (1, 2, 3) extends countersunk relative to the circumferential section (8).

## Revendications

1. Methode pour mouler un produit alimentaire, avec un récipient faisant office de gamelle avec un corps de récipient (1,2,3) et un couvercle (4), le corps de récipient comportant un fond (1) et une paroi latérale (2) inamovible par rapport à celui-ci et étant prévu pour contenir un aliment (7) destiné à être consommé au moyen d'un couvert, directement à partir du corps de récipient (1,2,3), cet aliment passant lors de sa fabrication d'un état fluide à un état solide et étant destiné à être consommé directement, sans démoulage, à partir du récipient formant gamelle, le couvercle (4) formant un moule pour donner à la surface libre de l'aliment contenu dans le récipient (1,2,3) et destiné à être consommé directement à partir de celui-ci une forme structurée rémanente lorsque le réciient est ouvert, l'aliment étant introduit sous forme fluide dans le corps de récipient (1,2,3) et le couvercle (4) appliqué sur celui-ci avant la solidification de l'aliment, puis amené en contact avec l'aliment fluide par rotation du récipient afin que l'aliment prenne la forme déterminée par le couvercle et qu'il conservera une fois solidifié.

2. Methode selon la revendication 1, le récipient étant caractérisé en ce que le volume de l'enceinte déterminée par le corps de récipient (1,2,3) et le couvercle appliqué sur celui-ci est au moins sensiblement égal au volume de l'aliment (7) introduit, de manière à ce qu'une fois le couvercle (4) appliqué sur le récipient l'aliment à l'état fluide touche la face intérieure du couvercle (4) et prend de façon permanente la forme déterminée par celui-ci lors de sa solidification.

3. Methode selon la revendication 1 ou 2, le récipient étant caractérisé en ce que le couvercle (4) comporte des régions bombées en direction du corps de récipient (1,2,3) et/ou des régions bombées en direction opposée.

4. Methode selon une des revendications précédentes, le récipient étant caractérisé en ce que le couvercle (4) comporte une région périphérique (8) reposant sur le bord supérieur (3) de la paroi latérale (2) du corps de récipient (1,2,3), auquel fait suite une région (10) du couvercle s'appliquant hermétiquement contre la face intérieure de la paroi latérale du corps de récipient (1,2,3) et formant un angle avec la région périphérique, de façon à ce que la partie du couvercle limitant vers le haut l'intérieur du corps de récipient (1,2,3) soit en retrait par rapport à la région périphérique (8).
